# FASCICULE DE BREVET EUROPEEN

(11) **EP 2 809 999 B1**
(45) Date de publication et mention de la délivrance du brevet: **01.02.2017**
(21) Numéro de dépôt: 12810342.1
(22) Date de dépôt: 04.12.2012
(51) Int. Cl.: F24H 9/12

(54) **BRISE-JET DISPOSé A L'ENTRéE D'EAU DANS UN RéSERVOIR DE STOCKAGE D'EAU CHAUDE**
STRAHLZERSTÄUBER AM EINGANG EINES WARMWASSERBEHÄLTERS
TAP NOZZLE POSITIONED AT tHE INTAKE OF A HOT WATER RESERVOIR

(30) Priorité: 06.12.2011 FR 1161213; 18.01.2012 FR 1250503
(43) Date de publication de la demande: 10.12.2014
(73) Titulaire: Triboix, Alain, 67220 Fouchy (FR); Triboix, Ariane, 67220 Fouchy (FR); Triboix, Fabrice, London SE9 1NS (GB)
(72) Inventeur: TRIBOIX, Alain, F-67220 Fouchy (FR)
(74) Mandataire: Littolff, Denis
(86) Numéro de dépôt international: PCT/FR2012/052800
(87) Numéro de publication internationale: WO 2013/083911

(56) Documents cités:
- EP-A2- 0 363 708
- AT-A4- 507 075
- DE-U1-202009 010 484
- GB-A- 843 519

## Description

La présente invention concerne un brise-jet placé sur le ou les conduits d'entrée d'eau dans un réservoir de stockage d'eau chaude, ainsi qu'un réservoir de stockage d'eau chaude qui en est muni. Le réservoir comporte au moins une entrée d'eau plus froide ou plus chaude que celle du réservoir et au moins une sortie d'eau. Du fait de l'arrivée et du départ, continus ou intermittents, d'eau plus chaude ou plus froide que l'eau dans le réservoir, de perte de chaleur par les parois, ou de génération de chaleur au sein du réservoir, la température de l'eau à l'intérieur du réservoir n'est pas uniforme. L'effet de la pesanteur conduit alors à une stratification de l'eau dans le réservoir, la stratification étant la tendance de l'eau chaude plus légère à rester dans la partie supérieure sous l'effet de la gravité. Un brise-jet tend à éviter le mélange de l'eau entrant dans le réservoir à celle s'y trouvant, il permet d'améliorer la stratification de l'eau dans le réservoir et d'éviter que l'eau se dirige directement vers la sortie.

L'invention s'applique plus particulièrement aux ballons de stockage d'eau chaude sanitaire qui ont généralement la forme d'un cylindre droit à base circulaire, l'axe du cylindre étant horizontal ou vertical, la hauteur du cylindre étant généralement plus importante que son diamètre. La ou les entrées d'eau froide sont dans la partie inférieure du réservoir tandis que la ou les sorties d'eau chaude sont dans la partie supérieure. Une entrée d'eau à température intermédiaire provenant d'un bouclage de l'eau chaude sanitaire peut également se faire dans une partie intermédiaire du ballon. Ces ballons d'eau chaude sanitaire comportent en outre des éléments permettant de chauffer l'eau tel que : serpentin d'eau plus chaude que l'eau du réservoir, résistance électrique, serpentin enroulé autour de la paroi extérieure du ballon où se condense un gaz à une température plus forte que la température de l'eau à l'intérieur du ballon. L'invention s'applique également plus particulièrement aux réservoirs d'accumulation d'eau chaude permettant de stocker de la chaleur en vue du chauffage des immeubles. Ces réservoirs ont généralement la forme d'un cylindre droit à base circulaire, l'axe du cylindre étant vertical, la hauteur du cylindre étant plus importante que son diamètre, et ils comportent des entrées et sorties d'eau chaude dans leur partie supérieure et des entrées et sorties d'eau refroidie dans leur partie inférieure. Ils peuvent également comporter des éléments chauffants tel que résistance électrique ou serpentin d'eau plus chaude que l'eau du réservoir.

A son entrée dans le réservoir, par l'intermédiaire d'un tube pouvant faire saillie à l'intérieur du réservoir, le jet d'eau possède une certaine énergie cinétique du fait de sa vitesse. Si aucun brise-jet n'est prévu, cette énergie cinétique va se transformer en partie en énergie cinétique turbulente favorisant le mélange de l'eau arrivant dans le réservoir à celle qui s'y trouve déjà et pour une autre part en énergie de pression favorisant l'écoulement direct du jet vers la ou les sorties. Ces deux phénomènes détruisent la stratification de l'eau dans le réservoir. Or éviter le mélange et favoriser la stratification sont des point cruciaux pour améliorer le fonctionnement des réservoirs de stockage d'eau chaude afin d'avoir de l'eau la plus chaude possible en partie haute et la plus froide possible en partie basse : le fonctionnement idéal serait la réalisation d'un écoulement piston. C'est à dire, s'agissant d'un ballon d'eau chaude sanitaire à titre d'exemple, le cas où l'eau froide arrivant par le bas du ballon ne se mélange pas du tout à l'eau chaude qui est au-dessus afin de permettre le soutirage d'eau sanitaire la plus chaude possible dans la partie supérieure du réservoir.

Les brise-jets connus utilisés sur les entrées d'eau dans un réservoir se divisent essentiellement en trois catégories :
- les brise-jets comportant un obstacle plan ou de forme arrondie placé en face du jet qui, tout en brisant la vitesse dans l'axe du jet, présentent l'inconvénient de favoriser la création de turbulence dans l'écoulement et donc le mélange,
- les brise-jets comportant un conduit divergeant qui transforme l'énergie cinétique en énergie de pression et présentent ainsi l'inconvénient d'augmenter la pression au niveau de l'arrivée d'eau dans le réservoir et donc de favoriser une tendance pour l'eau arrivant dans le réservoir à se diriger directement vers la sortie,
- les brise-jets comportant un corps creux avec une ou plusieurs ouvertures dans sa paroi, le corps creux ayant sa plus grande dimension dans l'axe du jet. L'inconvénient de ce dispositif est essentiellement que si les ouvertures sont de taille importante, l'eau ne sortira que par les ouvertures situées à l'extrémité du jet, alors que si les ouvertures sont trop petites, les vitesses à l'arrivée dans le réservoir restent importantes et favorisent le mélange. DE 20 2009 010 484 U1 décrit un tel dispositif.

Le brise-jet selon l'invention permet de remédier à ces inconvénients en permettant l'arrivée de l'eau dans le réservoir avec une vitesse et une pression faibles et ceci sans créer de turbulences.

On utilisera dans toute la suite les définitions suivantes :
- une surface cylindrique est une surface engendrée par une droite dite génératrice gardant une direction fixe et passant par un point variable décrivant une courbe plane fermée, perpendiculaire aux génératrices, appelée courbe directrice,
- un cylindre droit est un volume limité par une surface cylindrique et par deux plans parallèles perpendiculaires aux génératrices de cette surface, la courbe directrice pourra ainsi être considérée comme contenue dans l'un quelconque de ces deux plans,
- la surface cylindrique comprise entre les deux plans limitant le cylindre est la paroi latérale,
- la surface, dans un des plans limitant le cylindre, délimitée par la courbe directrice est une base,
- une boîte est un cylindre droit dont la courbe directrice a une forme se rapprochant d'une ellipse ou d'un rectangle, cette courbe directrice peut par exemple être un rectangle, déformé ou non et arrondi ou non dans ses angles,
- la plus petite dimension d'une base est le diamètre du plus grand cercle pouvant être tracé à l'intérieur de la courbe directrice limitant cette base, c'est le plus petit coté dans le cas d'un rectangle et le petit axe dans le cas d'une ellipse,
- la plus grande dimension d'une base est le diamètre du plus petit cercle pouvant contenir la courbe directrice limitant cette base, c'est la diagonale dans le cas d'un rectangle et le grand axe dans le cas d'une ellipse,
- le facteur de forme d'une base est le rapport entre la plus grande et la plus petite dimension de la base,
- la distance entre les deux plans limitant le cylindre droit est la hauteur de la boîte, et
- l'axe d'un jet à son arrivée dans la boîte est l'axe du tube de courant d'eau à la sortie d'un tube d'entrée d'eau dans la boîte ou à la sortie d'un conduit de guidage du flux d'eau placé en sortie dudit tube d'entrée d'eau et à l'intérieur de la boîte.

Le brise-jet selon l'invention est disposé devant un tube d'entrée d'eau à l'intérieur d'un réservoir d'eau chaude comportant au moins une entrée d'eau et au moins une sortie d'eau, il est constitué d'une boîte fixée sur ledit tube d'entrée d'eau ou sur les parois du réservoir, l'eau pénétrant dans cette boîte avant d'aller dans le réservoir. Ladite boîte est délimitée par une paroi latérale cylindrique ayant ses génératrices perpendiculaires à l'axe du jet à son arrivée dans la boîte et par deux bases, ce qui permet la formation d'un ou plusieurs tourbillons d'axe sensiblement parallèle aux génératrices du cylindre droit constituant la boîte. Au moins une ouverture est pratiquée dans au moins une des deux bases de la boîte pour la faire communiquer avec le réservoir, ce qui permet à l'eau de pénétrer dans le réservoir après être passée dans ladite boîte. Le brise-jet selon l'invention permet ainsi de dissiper l'énergie cinétique de l'eau avant son entrée dans le réservoir du fait de la génération naturelle d'un ou plusieurs tourbillons d'axe sensiblement parallèle aux génératrices de la paroi latérale.

Selon un mode particulier de réalisation, un facteur de forme des bases inférieur à 6, favorise la formation de ces tourbillons.

Selon un mode particulier de réalisation, un rapport entre la plus petite dimension des bases et la hauteur de la boîte supérieur à 2 favorise également la formation de ces tourbillons.

Selon un mode particulier de réalisation, afin que les axes de ces tourbillons restent au maximum perpendiculaires aux bases de la boîte, le facteur de forme des bases est compris entre 1 et 3.

Selon un mode particulier de réalisation, afin de favoriser encore plus la formation de tourbillons d'axe perpendiculaire aux bases de la boîte, le rapport entre la plus petite dimension des bases et la hauteur de la boîte est compris entre 3 et 7.

On pourrait par exemple utiliser une boîte présentant un facteur de forme de l'ordre de 2 et un rapport entre la plus petite dimension des bases et la hauteur de la boîte de l'ordre de 5.

Selon un mode particulier de réalisation, la surface de la ou des ouvertures pratiquées dans au moins une des deux bases de la boîte est sensiblement supérieure à la section droite du tube d'entrée, ce qui permet la pénétration de l'eau dans le réservoir avec une vitesse faible du fait de la surface de la ou des ouvertures plus importante que la section droite du tube d'entrée. Le brise-jet selon l'invention permet ainsi de diminuer fortement le mélange de l'eau pénétrant dans le réservoir avec l'eau qu'il contient.

Selon un mode particulier de réalisation, l'axe du jet à son arrivée dans la boîte est tangentiel à la paroi latérale. Dans ce cas, un seul tourbillon d'axe sensiblement parallèle aux génératrices de la paroi latérale centré sur le milieu de la boîte se forme dans celle-ci du fait que l'écoulement a tendance à suivre les parois latérales, la ou les ouvertures sont alors pratiquées sensiblement au centre d'au moins une des deux bases limitant la boîte. Cette disposition permet une pénétration de l'eau dans le réservoir avec une pression faible car, comme il est connu en mécanique des fluides, la pression au centre du tourbillon ou vortex est plus faible que sur sa périphérie. La faible pression de l'eau à son arrivée dans le réservoir permet ainsi de diminuer la tendance de l'eau pénétrant dans le réservoir à aller directement vers la ou les sorties. Cet avantage se combinant aux avantages déjà décrits, la stratification de l'eau dans le réservoir est améliorée.

Selon un mode alternatif de réalisation, l'axe du jet à son arrivée dans la boîte n'est pas tangentiel à la paroi latérale. Dans ce cas, deux tourbillons d'axe sensiblement parallèle aux génératrices de la paroi latérale se forment de part et d'autre de l'axe du jet à son arrivée dans la boîte du fait que l'écoulement, après avoir buté sur la paroi opposée, se divise en deux jets qui suivent les parois latérales. Dans ce cas, l'axe du jet à son arrivée dans la boîte divisant la boîte en deux parties, la ou les ouvertures sont pratiquées sensiblement au centre d'au moins une desdites parties dans au moins une des deux bases de la boîte. Cette disposition permet, en augmentant la surface totale des ouvertures, de diminuer encore la vitesse de l'eau pénétrant dans le réservoir.

Selon un mode particulier de réalisation, des ailettes sont disposées autour de la ou des ouvertures à l'intérieur de la boîte afin d'éviter que l'écoulement tourbillonnaire à l'intérieur de la boîte se propage dans le réservoir. Ces ailettes peuvent être à section rectangulaire, en forme d'arc de cercle ou également présenter une forme aérodynamique comme les aubes de roues de turbomachines. Cette disposition favorise une vitesse d'arrivée de l'eau dans le réservoir faible et uniforme. Préférentiellement, les cordes des dites ailettes font un angle inférieur à 90 degrés avec la tangente à la courbe limitant l'ouverture, les cordes des ailettes proche de l'axe du jet à son arrivée dans la boîte faisant elles même sensiblement le même angle aigu avec l'axe dudit jet.

Selon une configuration possible, lorsque le tube d'entrée envoie dans la boîte de l'eau plus froide que l'eau du réservoir, l'axe du jet à son arrivée dans la boîte étant horizontal, les deux bases limitant la boîte sont disposées horizontalement et la ou les ouvertures sont pratiquées uniquement dans la base située au-dessous de l'axe du jet à son arrivée dans la boîte. Cela permet de favoriser l'écoulement d'eau froide vers le bas et donc la stratification.

Selon une variante, lorsque le tube d'entrée envoie dans la boîte de l'eau plus chaude que l'eau du réservoir, l'axe de ce jet à son arrivée dans la boîte étant horizontal, les deux bases limitant la boîte sont disposées horizontalement et la ou les ouvertures sont pratiquées uniquement dans la base située au-dessus de l'axe du jet à son arrivée dans la boîte. L'objectif est de favoriser l'écoulement d'eau chaude vers le haut et donc la stratification.

Selon un mode particulier de réalisation, plusieurs tubes d'entrée d'eau arrivent dans la boîte ce qui permet de limiter l'encombrement en limitant le brise-jet à un seul élément et également de favoriser la formation de grands tourbillons dissipateurs d'énergie.

Selon un mode particulier de réalisation un ou plusieurs tubes de sortie d'eau partent de la boîte et non pas directement du réservoir. Cette disposition permet, lorsque le réservoir est utilisé pour accumuler de la chaleur, une entrée d'eau chaude dans le réservoir provenant par exemple d'une chaudière et une sortie d'eau chaude du réservoir sensiblement au même niveau alimentant par exemple des radiateurs, de fournir aux radiateurs l'eau la plus chaude possible. Il en est de même dans la partie inférieure du réservoir où l'entrée d'eau plus froide que celle du réservoir provenant du retour du circuit de radiateurs est placée au même niveau que la sortie d'eau du réservoir allant vers la chaudière.

Selon un mode particulier de réalisation, la paroi latérale de la boîte peut être constituée en tout ou partie d'une partie de la paroi du réservoir.

Selon un mode particulier de réalisation, une des bases de la boîte peut être constituée en tout ou partie d'une partie de la paroi du réservoir, par exemple le fond du réservoir, auquel cas cette base peut être une surface légèrement bombée.

L'invention concerne également les réservoirs d'eau chaude munis de brise-jets ayant les caractéristiques précisées auparavant.

Les dessins annexés, illustrant l'invention, sont tels que:
La figure 1 représente en coupe dans un plan vertical un mode de réalisation du brise-jet équipant l'entrée d'eau froide située dans la partie inférieure d'un réservoir d'eau chaude sanitaire.
La figure 2 représente la coupe AA indiquée sur la figure 1, c'est à dire dans un plan horizontal contenant l'axe du jet vu par le dessus, l'arrivée d'eau dans la boîte se faisant tangentiellement à la paroi latérale.
La figure 3 représente une vue en perspective d'un mode de réalisation du brise-jet seul lorsque l'arrivée d'eau se fait tangentiellement à la paroi latérale.
La figure 4 représente en coupe dans un plan vertical un mode de réalisation du brise-jet équipant l'entrée d'eau chaude située dans la partie supérieure d'un réservoir de stockage d'eau chaude destiné à accumuler de la chaleur.
La figure 5 représente la coupe AA indiquée sur la figure 4, c'est à dire dans un plan horizontal contenant l'axe du jet vu par le dessous, l'arrivée d'eau dans la boîte ne se faisant pas tangentiellement à la paroi latérale.
La figure 6 représente une vue en perspective d'un mode de réalisation du brise-jet seul lorsque l'arrivée d'eau ne se fait pas tangentiellement à la paroi latérale.
La figure 7 représente une coupe dans un plan horizontal contenant l'axe des jets, vue par le dessus, d'un mode de réalisation destiné à un ballon d'eau chaude sanitaire comportant divers éléments verticaux partant du fond du ballon.
La figure 8 représente une coupe dans un plan horizontal contenant l'axe des jets dans le cas où plusieurs tubes d'entrées arrivent dans la boîte et un tube de sortie en part.
La figure 9 représente une coupe dans un plan horizontal contenant l'axe du jet dans le cas où des ailettes sont disposées sur la périphérie de l'ouverture.
La figure 10 représente une coupe dans un plan horizontal contenant l'axe du jet à son arrivée dans la boîte, l'eau étant amenée par le dessous par un tube vertical, le flux d'eau étant ensuite canalisé horizontalement par un conduit de section rectangulaire limité par deux parois verticales et une partie des deux bases de la boîte.

Le brise-jet selon l'invention peut être réalisé en tôle emboutie, pliée puis soudée. Il peut également être réalisé en matière plastique moulée par injection. Ce brise-jet peut être fixé par soudage sur les parois du réservoir (2) ou sur le tube d'entrée d'eau (1), il peut également être vissé sur ce tube.

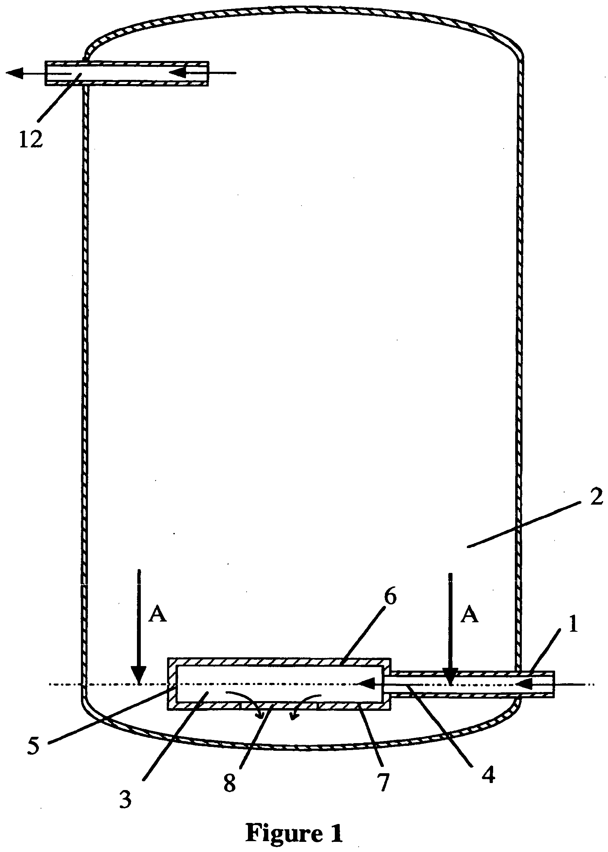

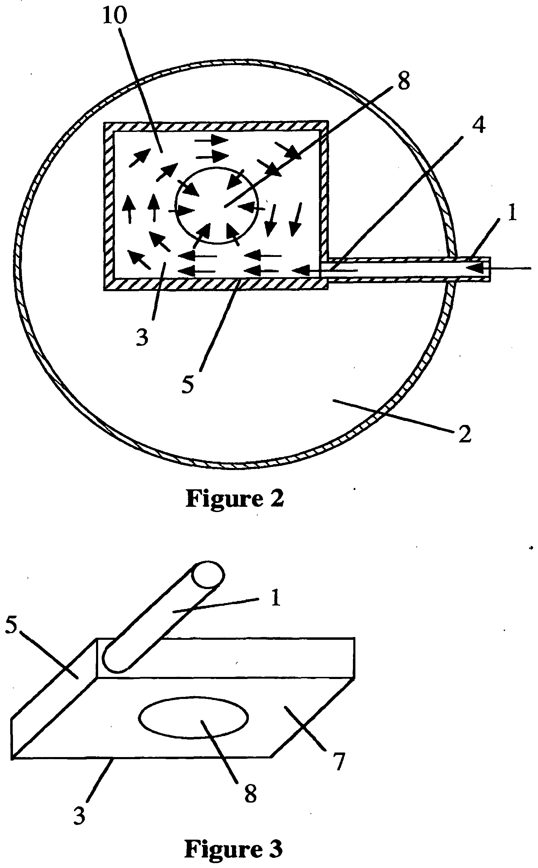

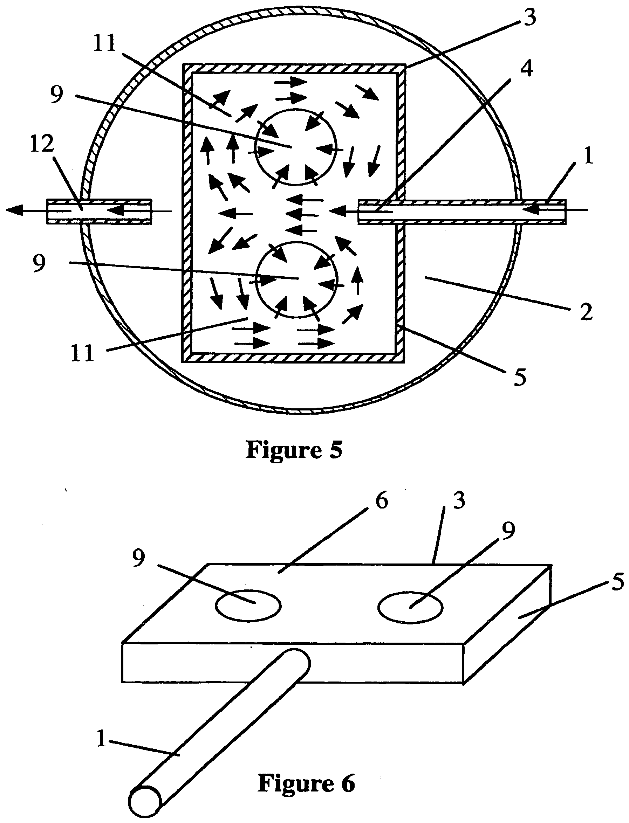

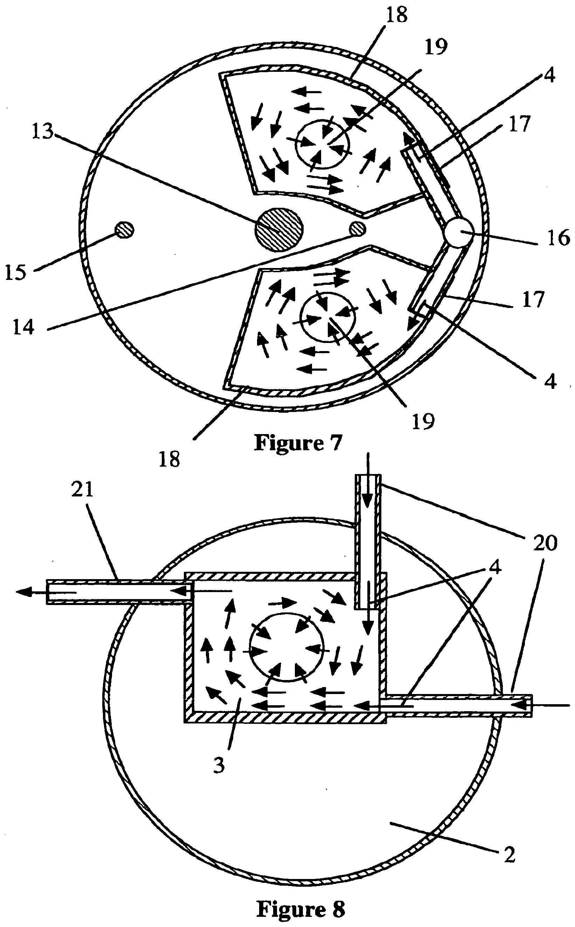

En référence aux dessins annexés, dans lesquels les mêmes éléments portent des références identiques, le brise-jet selon l'invention est disposé devant un tube d'entrée d'eau (1) à l'intérieur d'un réservoir (2) d'eau chaude comportant au moins une entrée d'eau (1) et au moins une sortie d'eau (12). Il est constitué d'une boîte (3) fixée sur ledit tube d'entrée d'eau (1) ou sur les parois du réservoir (2), l'eau pénétrant dans cette boîte comme indiqué par la flèche (4) avant d'aller dans le réservoir (2). La boîte (3) est délimitée par une paroi latérale cylindrique (5) ayant ses génératrices perpendiculaires à l'axe du jet (4) à son arrivée dans la boîte (3), la courbe directrice de cette surface cylindrique étant un rectangle dans le cas des figures 1 à 6 et une forme proche d'un rectangle dans le cas de la figure 7, et par deux bases (6 et 7) perpendiculaires aux génératrices. Le facteur de forme des bases (6, 7) est compris entre 1 et 3, et le rapport entre la plus petite dimension des bases (6, 7) et la hauteur de la boîte (3) est compris entre 3 et 7. Au moins une ouverture (8, 9) est pratiquée dans au moins une des deux bases (6, 7) limitant la boîte (3) pour la faire communiquer avec le réservoir (2), ce qui permet à l'eau de pénétrer dans le réservoir (2) après être passée dans ladite boîte (3). Le brise-jet selon l'invention permet ainsi de dissiper l'énergie cinétique de l'eau avant son entrée dans le réservoir (2) du fait de la génération naturelle de un ou plusieurs tourbillons (10, 11) d'axe sensiblement parallèle aux génératrices de la paroi latérale. La surface de la ou des ouvertures (8, 9, 19) pratiquées dans au moins une des deux bases (6, 7) de la boîte (3) est sensiblement supérieure à la section droite du tube d'entrée (1) ce qui permet la pénétration de l'eau dans le réservoir (2) avec une vitesse faible. Le brise-jet selon l'invention permet ainsi de diminuer fortement le mélange de l'eau pénétrant dans le réservoir avec l'eau qu'il contient.

Dans la forme de réalisation selon les figures 1, 2 et 3, la courbe directrice est un rectangle, le facteur de forme des bases (6 et 7) est de 1,5 environ et le rapport entre la plus petite dimension des bases, c'est à dire le plus petit coté du rectangle dans ce cas, et la hauteur de la boîte est d'environ 4. L'entrée d'eau dans la boîte (3) se faisant tangentiellement à la paroi latérale (5), un seul tourbillon (10) d'axe parallèle aux génératrices de la paroi latérale (5) et centré sur le milieu de la boîte (3) se forme dans la boîte (3) car l'écoulement a tendance à suivre les parois latérales (5), auquel cas la ou les ouvertures (8) sont pratiquées sensiblement au centre d'au moins une des deux bases rectangulaires (6, 7) limitant la boîte (3). Cette disposition permet une pénétration de l'eau dans le réservoir (2) avec une pression faible car, comme il est connu en mécanique des fluides, la pression au centre du tourbillon ou vortex est plus faible que sur sa périphérie. La faible pression de l'eau à son arrivée dans le réservoir (2) permet ainsi de diminuer la tendance de l'eau pénétrant dans le réservoir (2) à aller directement vers la ou les sorties (12). Cet avantage se combinant aux avantages déjà décrits, la stratification de l'eau dans le réservoir (2) est améliorée.

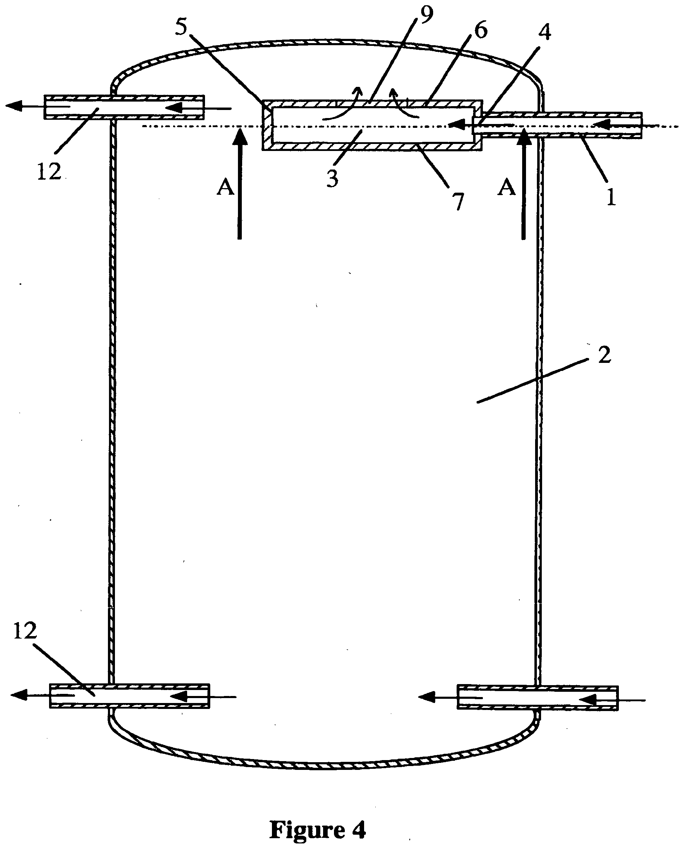

Dans la forme de réalisation selon les figures 4, 5 et 6, le facteur de forme des bases (6, 7) est de 1,8 environ et le rapport entre la plus petite dimension des bases, c'est à dire le plus petit coté du rectangle dans ce cas, et la hauteur de la boîte est d'environ 5. L'entrée d'eau dans la boîte (3) ne se faisant pas tangentiellement à la paroi latérale (5), deux tourbillons (11) d'axes sensiblement parallèles aux génératrices de la paroi latérale (5) se forment dans la boîte (3) car l'écoulement, après avoir buté sur la paroi opposée, se divise en deux jets qui suivent les parois latérales. Dans ce cas, les ouvertures (9) sont pratiquées de part et d'autre de l'axe du jet (4) à son arrivée dans la boîte (3) dans au moins une des deux bases rectangulaires (6, 7) limitant la boîte (3). Cette disposition permet, en augmentant la surface totale des ouvertures, de diminuer encore la vitesse de l'eau pénétrant dans le réservoir (2).

Dans la forme de réalisation selon les figures 1, 2 et 3, le tube d'entrée (1) envoyant dans la boîte (3) de l'eau plus froide que l'eau du réservoir tangentiellement à la paroi latérale (5), l'axe du jet (4) à son arrivée dans la boîte (3) étant horizontal, les deux bases rectangulaires (6, 7) limitant la boîte (3) étant horizontales, l'ouverture (8) est pratiquée uniquement dans la base (7) située au-dessous de l'axe du jet (4) à son arrivée dans la boîte (3) afin de favoriser l'écoulement d'eau froide vers le bas et donc la stratification. Une forme de réalisation identique serait bien entendu également possible si le brise-jet décrit dans ce paragraphe était placé sur un tube d'entrée d'eau plus chaude que l'eau du réservoir situé dans la partie supérieure du réservoir, mais l'ouverture (8) serait alors pratiquée dans la base (6) supérieure.

Dans la forme de réalisation selon les figures 4, 5 et 6, le tube d'entrée envoyant dans la boîte (3) de l'eau plus chaude que l'eau du réservoir, l'axe du jet (4) à son arrivée dans la boîte (3) étant horizontal, les deux bases rectangulaires (6, 7) limitant la boîte (3) étant horizontales, deux ouvertures (9) sont pratiquées uniquement dans la base (6) située au-dessus de l'axe du jet (4) à son arrivée dans la boîte (3) afin de favoriser l'écoulement d'eau chaude vers le haut et donc la stratification. Une forme de réalisation identique serait bien entendu également possible si le brise-jet décrit dans ce paragraphe était placé sur un tube d'entrée d'eau plus froide que l'eau du réservoir situé dans la partie inférieure du réservoir, les deux ouvertures (9) seraient alors pratiquées dans la base (7) inférieure.

La forme de réalisation de la figure 7 est particulièrement adaptée au cas où sont placées verticalement et à partir du fond d'un ballon d'eau chaude sanitaire une résistance électrique (13), une tubulure de puisage d'eau chaude (15), une tige (14) portant un thermostat. L'arrivée d'eau froide se faisant par le dessous par un tube vertical (16), ce tube se divise en deux par l'intermédiaire de coudes à 90 degrés afin d'avoir les axes des jets (4) à leur arrivée dans la boîte (3) horizontaux. Deux brise-jets (18) selon l'invention dont la forme de la base est celle d'un rectangle déformé afin de contourner ces différents éléments (13, 14) sont alors disposés devant les deux tubes (17). Les jets d'eau froide arrivant tangentiellement aux parois latérales, une ouverture (19) de surface supérieure à la section droite des tubes d'entrée (17) est pratiquée sensiblement au centre de la base inférieure de chaque boîte.

Dans la forme de réalisation de la figure 8, plusieurs tubes d'entrée d'eau (20) peuvent arriver dans la boîte (3), ce qui permet de limiter l'encombrement en limitant le brise-jet à un seul élément et également de favoriser la formation de grands tourbillons dissipateurs d'énergie.

Dans la forme de réalisation de la figure 8 un ou plusieurs tubes de sortie d'eau (21) partent de la boîte (3). Cette disposition permet, lorsque le réservoir (2) est utilisé pour accumuler de la chaleur, une entrée d'eau chaude dans le réservoir (2) provenant par exemple d'une chaudière et une sortie d'eau chaude du réservoir (2) sensiblement au même niveau alimentant des radiateurs, de fournir aux radiateurs l'eau la plus chaude possible. Il en est de même dans la partie inférieure du réservoir (2) ou l'entrée d'eau plus froide que celle du réservoir (2) provenant du retour du circuit de radiateurs est placée sensiblement au même niveau que la sortie d'eau du réservoir (2) allant vers la chaudière.

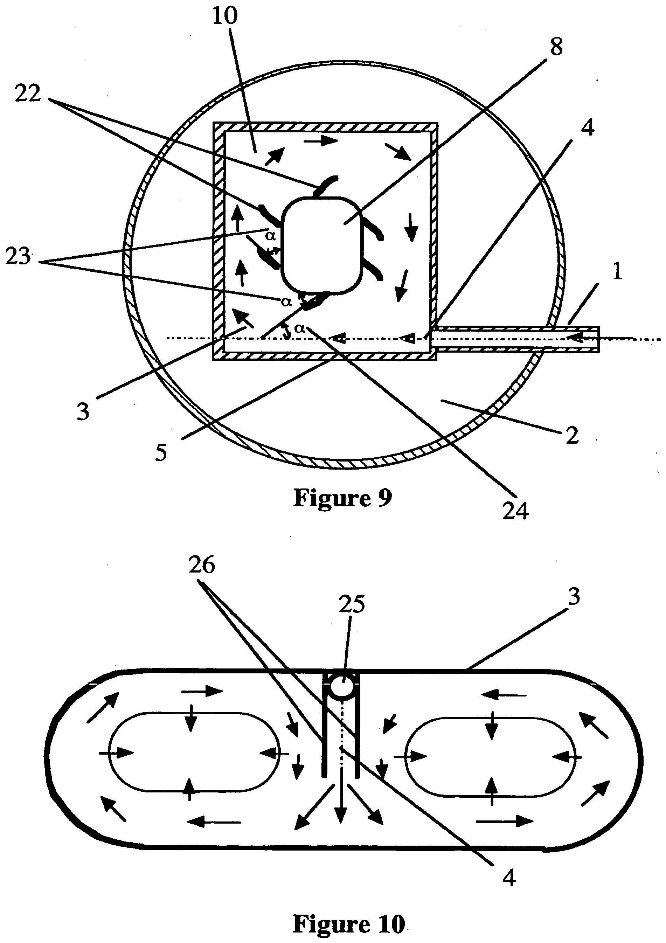

Dans la forme de réalisation de la figure 9 des ailettes (22) sont disposées autour de l'ouverture (8) à l'intérieur de la boîte afin d'éviter que l'écoulement tourbillonnaire à l'intérieur de la boîte se propage dans le réservoir. Les cordes des dites ailettes font un angle α (23) de l'ordre de 45 degrés avec la tangente à la courbe limitant l'ouverture, les cordes des ailettes proche de l'axe du jet (4) à son arrivée dans la boîte (3) faisant elles même sensiblement le même angle aigu (24) avec l'axe dudit jet.

Dans la forme de réalisation de la figure 10, un tube vertical (25) amène l'eau dans la boîte par le dessous, deux parois verticales (26) occupant toute la hauteur de la boîte constituent avec une partie des deux bases de la boîte un conduit rectangulaire guidant le flux d'eau horizontalement afin que l'axe du jet (4) à son arrivée dans la boîte (3) soit horizontal.

A titre non limitatif, le brise-jet selon l'invention est particulièrement destiné à équiper les entrées d'eau froide dans les ballons d'eau chaude sanitaire et les entrées d'eau chaude ou froide dans les réservoirs de stockage d'eau chaude équipant certains systèmes de chauffage utilisant l'eau comme fluide caloporteur.

## Revendications

1. Brise-jet, disposé devant un tube d'entrée d'eau (1) à l'intérieur d'un réservoir (2) d'eau chaude comportant au moins une entrée d'eau et au moins une sortie d'eau (12), constitué d'une boîte (3) fixée sur ledit tube d'entrée d'eau (1) ou sur les parois du réservoir (2), l'eau pénétrant dans cette boîte (3) avant d'aller dans le réservoir (2), ladite boîte (3) étant délimitée par une paroi latérale cylindrique (5) ayant ses génératrices perpendiculaires à l'axe du jet (4) à son arrivée dans la boîte (3) et par deux bases (6, 7), **caractérisé en ce que** au moins une ouverture (8, 9, 19) est pratiquée dans au moins une des deux bases (6, 7).

2. Brise-jet selon la revendication 1 **caractérisé en ce que** le facteur de forme des bases (6, 7) est inférieur à 6.

3. Brise-jet selon l'une des revendications 1 ou 2 **caractérisé en ce que** le rapport entre la plus petite dimension des bases (6, 7) et la hauteur de la boîte (3) est supérieur à 2.

4. Brise-jet selon l'une des revendications 2 ou 3, **caractérisé en ce que** le facteur de forme des bases est compris entre 1 et 3.

5. Brise-jet selon l'une des revendications 2, 3 ou 4, **caractérisé en ce que** le rapport entre la plus petite dimension des bases et la hauteur de la boîte est compris entre 3 et 7.

6. Brise-jet selon l'une quelconque des revendications précédentes, **caractérisé en ce que** la surface de la ou des ouvertures (8, 9, 19) pratiquées dans au moins une des deux bases (6, 7) de la boîte (3) est sensiblement supérieure à la section droite du tube d'entrée (1).

7. Brise-jet selon l'une quelconque des revendications précédentes, **caractérisé en ce que**, lorsque l'axe du jet (4) à son arrivée dans la boîte (3) est tangentiel à la paroi latérale (5), la ou les ouvertures (8, 19) sont pratiquées sensiblement au centre d'au moins une des deux bases (6,7) limitant la boîte (3).

8. Brise-jet selon l'une quelconque des revendications 1 à 6, **caractérisé en ce que**, lorsque l'axe du jet (4) à son arrivée dans la boîte (3) n'est pas tangentiel à la paroi latérale (5), divisant ainsi la boîte (3) en deux parties, la ou les ouvertures (9) sont pratiquées sensiblement au centre d'au moins une desdites parties dans au moins une des deux bases (6, 7) de la boîte (3).

9. Brise-jet selon l'une quelconque des revendications précédentes **caractérisé en ce que** des ailettes (22) sont disposées autour de la ou des ouvertures (8) à l'intérieur de la boîte.

10. Brise-jet selon la revendication 9 **caractérisé en ce que** les cordes des dites ailettes (22) font un angle α (23) inférieur à 90 degrés avec la tangente à la courbe limitant l'ouverture, les cordes des ailettes proche de l'axe du jet (4) à son arrivée dans la boîte (3) faisant elles même sensiblement le même angle aigu α (24) avec l'axe dudit jet.

11. Brise-jet selon l'une quelconque des revendications précédentes, **caractérisé en ce que**, lorsque le tube d'entrée (1) envoie dans la boîte (3) de l'eau plus froide que l'eau du réservoir, l'axe du jet (4) à son arrivée dans la boîte (3) étant horizontal, les deux bases (6, 7) limitant la boîte (3) sont disposées horizontalement et la ou les ouvertures (8, 19) sont pratiquées uniquement dans la base (7) située au-dessous de l'axe du jet (4) à son arrivée dans la boîte (3).

12. Brise-jet selon l'une des revendications 1 à 10, **caractérisé en ce que**, lorsque le tube d'entrée (1) envoie dans la boîte (3) de l'eau plus chaude que l'eau du réservoir, l'axe du jet (4) à son arrivée dans la boîte (3) étant horizontal, les deux bases (6, 7) limitant la boîte (3) sont disposées horizontalement et la ou les ouvertures (9) sont pratiquées uniquement dans la base (6) située au-dessus de l'axe du jet (4) à son arrivée dans la boîte (3).

13. Brise-jet selon l'une quelconque des revendications précédentes, **caractérisé en ce qu'**un ou plusieurs tubes d'entrée d'eau (20) arrivent dans la boîte (3).

14. Brise-jet selon l'une quelconque des revendications précédentes, **caractérisé en ce qu'**un ou plusieurs tubes de sortie d'eau (21) partent de la boîte (3).

15. Brise-jet selon l'une quelconque des revendications précédentes, **caractérisé en ce que** la paroi latérale (5) de la boîte (3) peut être constituée en tout ou partie d'une partie de la paroi du réservoir (2).

16. Brise-jet selon l'une quelconque des revendications précédentes, **caractérisé en ce qu'**une des bases (6, 7) de la boîte (3) peut être constituée en tout ou partie d'une partie de la paroi du réservoir (2).

17. Brise-jet selon l'une quelconque des revendications 15 ou 16, **caractérisé en ce qu'**une des bases (6, 7) de la boîte (3) peut être légèrement bombée.

18. Réservoir muni d'un brise-jet selon l'une quelconque des revendications précédentes.

## Patentansprüche

1. Strahlzerstäuber, angeordnet vor einem Wassereinlassrohr (1) im Innern eines Warmwasserspeichers (2), aufweisend mindestens einen Wassereinlass und mindestens einen Wasserauslass (12), gebildet von einem Gehäuse (3), das auf dem Wassereinlassrohr (1) oder auf den Wänden des Speichers (2) befestigt ist, wobei das Wasser in dieses Gehäuse (3) eindringt, bevor es in den Speicher (2) gelangt, wobei das Gehäuse (3) von einer zylindrischen Seitenwand (5) begrenzt ist, die ihre Mantellinien senkrecht zur Achse des Strahls (4) bei seiner Ankunft im Gehäuse (3) hat, und von zwei Basen (6, 7), **dadurch gekennzeichnet, dass** mindestens eine Öffnung (8, 9, 19) in mindestens einer der zwei Basen (6, 7) eingearbeitet ist.

2. Strahlzerstäuber nach Anspruch 1, **dadurch gekennzeichnet, dass** der Formfaktor der Basen (6, 7) kleiner als 6 ist.

3. Strahlzerstäuber nach einem der Ansprüche 1 oder 2, **dadurch gekennzeichnet, dass** das Verhältnis zwischen der kleinsten Abmessung der Basen (6, 7) und der Höhe des Gehäuses (3) größer als 2 ist.

4. Strahlzerstäuber nach einem der Ansprüche 2 oder 3, **dadurch gekennzeichnet, dass** der Formfaktor der Basen zwischen 1 und 3 inklusive ist.

5. Strahlzerstäuber nach einem der Ansprüche 2, 3 oder 4, **dadurch gekennzeichnet, dass** das Verhältnis zwischen der kleinsten Abmessung der Basen und der Höhe des Gehäuses zwischen 3 und 7 inklusive ist.

6. Strahlzerstäuber nach einem der vorangehenden Ansprüche, **dadurch gekennzeichnet, dass** die Fläche der in mindestens einer der zwei Basen (6, 7) des Gehäuses (3) eingearbeiteten Öffnung(en) (8, 9, 19) etwa größer als der gerade Querschnitt des Einlassrohrs (1) ist.

7. Strahlzerstäuber nach einem der vorangehenden Ansprüche, **dadurch gekennzeichnet, dass**, wenn die Achse des Strahls (4) bei seiner Ankunft im Gehäuse (3) tangential zur Seitenwand (5) ist, die Öffnung(en) (8, 19) etwa im Zentrum von mindestens einer der zwei Basen (6, 7), die das Gehäuse (3) begrenzen, eingearbeitet ist/sind.

8. Strahlzerstäuber nach einem der Ansprüche 1 bis 6, **dadurch gekennzeichnet, dass**, wenn die Achse des Strahls (4) bei seiner Ankunft im Gehäuse (3) nicht tangential zur Seitenwand (5) ist, wobei dann das Gehäuse (3) in zwei Teile geteilt ist, die Öffnung(en) (9) etwa im Zentrum mindestens einer der Teile in mindestens einer der zwei Basen (6, 7) des Gehäuses (3) eingearbeitet ist/sind.

9. Strahlzerstäuber nach einem der vorangehenden Ansprüche **dadurch gekennzeichnet, dass** Flügel (22) um die Öffnung(en) (8) im Innern des Gehäuses angeordnet sind.

10. Strahlzerstäuber nach Anspruch 9, **dadurch gekennzeichnet, dass** die Streifen der Flügel (22) einen Winkel α (23) unter 90 Grad mit der Tangente an der Krümmung, die die Öffnung begrenzt, bildet, wobei die Streifen der Flügel in der Nähe der Achse des Strahls (4) bei seiner Ankunft im Gehäuse (3) selbst denselben spitzen Winkel α (24) mit der Achse des Strahls bilden.

11. Strahlzerstäuber nach einem der vorangehenden Ansprüche, **dadurch gekennzeichnet, dass**, wenn das Einlassrohr (1) in das Gehäuse (3) Wasser schickt, das kälter als das Wasser des Speichers ist, wobei die Achse des Strahls (4) bei seiner Ankunft im Gehäuse (3) horizontal ist, die beiden Basen (6, 7), die das Gehäuse (3) begrenzen, horizontal angeordnet sind und die Öffnung(en) (8, 19) nur in die Basis (7) eingearbeitet ist/sind, die sich unter der Achse des Strahls (4) bei seiner Ankunft im Gehäuse (3) befindet.

12. Strahlzerstäuber nach einem der Ansprüche 1 bis 10, **dadurch gekennzeichnet, dass**, wenn das Einlassrohr (1) in das Gehäuse (3) Wasser schickt, das wärmer als das Wasser des Speichers ist, wobei die Achse des Strahls (4) bei seiner Ankunft im Gehäuse (3) horizontal ist, die beiden Basen (6, 7), die das Gehäuse (3) begrenzen, horizontal angeordnet sind und die Öffnung(en) (9) nur in die Basis (6) eingearbeitet ist/sind, die sich über der Achse des Strahls (4) bei seiner Ankunft im Gehäuse (3) befindet.

13. Strahlzerstäuber nach einem der vorangehenden Ansprüche, **dadurch gekennzeichnet, dass** ein oder mehrere Wassereinlassrohre (20) im Gehäuse (3) ankommen.

14. Strahlzerstäuber nach einem der vorangehenden Ansprüche, **dadurch gekennzeichnet, dass** ein oder mehrere Wasserauslassrohre (21) vom Gehäuse (3) abgehen.

15. Strahlzerstäuber nach einem der vorangehenden Ansprüche, **dadurch gekennzeichnet, dass** die Seitenwand (5) des Gehäuses (3) ganz oder zum Teil aus einem Teil der Wand des Speichers (2) gebildet sein kann.

16. Strahlzerstäuber nach einem der vorangehenden Ansprüche, **dadurch gekennzeichnet, dass** eine der Basen (6, 7) des Gehäuses (3) ganz oder zum Teil aus einem Teil der Wand des Speichers (2) gebildet sein kann.

17. Strahlzerstäuber nach einem der Ansprüche 15 oder 16, **dadurch gekennzeichnet, dass** eine der Basen (6, 7) des Gehäuses (3) leicht gewölbt sein kann.

18. Speicher, ausgestattet mit einem Strahlzerstäuber nach einem der vorangehenden Ansprüche.

## Claims

1. A water break nozzle, arranged in front of a water intake tube (1) inside a hot water tank (2) including at least one water intake and at least one water outlet (12), made up of a box (3) fixed on said water intake tube (1) or on the walls of the tank (2), the water penetrating this box (3) before going into the tank (2), said box (3) being defined by a cylindrical side wall (5) having its generatrices perpendicular to the axis of the jet (4) upon its arrival in the box (3) and by two bases (6, 7), **characterized in that** at least one opening (8, 9, 19) is formed in at least one of the two bases (6, 7).

2. The water break nozzle according to claim 1, **characterized in that** the shape factor of the bases (6, 7) is less than 6.

3. The water break nozzle according to one of claims 1 or 2, **characterized in that** the ratio between the smallest dimension of the bases (6, 7) and the height of the box (3) is greater than 2.

4. The water break nozzle according to one of claims 2 or 3, **characterized in that** the shape factor of the bases is comprised between 1 and 3.

5. The water break nozzle according to one of claims 2, 3 or 4, **characterized in that** the ratio between the smallest dimension of the bases and the height of the box is comprised between 3 and 7.

6. The water break nozzle according to any one of the preceding claims, **characterized in that** the surface of the opening(s) (8, 9, 19) formed in at least one of the two bases (6, 7) of the box (3) is substantially larger than the straight section of the intake tube (1).

7. The water break nozzle according to any one of the preceding claims, **characterized in that**, when the axis of the jet (4) upon arriving in the box (3) is tangential to the side wall (5), the opening(s) (8, 19) are formed substantially at the center of at least one of the two bases (6, 7) limiting the box (3).

8. The water break nozzle according to any one of claims 1 to 6, **characterized in that**, when the axis of the jet (4) upon its arrival in the box (3) is not tangential to the side wall (5), thus dividing the box (3) into two parts, the opening(s) (9) are formed substantially at the center of at least one of said parts in at least one of the two bases (6, 7) of the box (3).

9. The water break nozzle according to any one of the preceding claims, **characterized in that** the fins (22) are arranged around the opening(s) (8) inside the box.

10. The water break nozzle according to claim 9, **characterized in that** the cords of said fins (22) form an angle α (23) smaller than 90 degrees with the tangent to the curve limiting the opening, the cords of the fins close to the axis of the jet (4) upon its arrival in the box (3) themselves forming substantially the same acute angle α (24) with the axis of said jet.

11. The water break nozzle according to any one of the preceding claims, **characterized in that**, when the intake tube (1) sends water colder than the water in the tank into the box (3), the axis of the jet (4) upon arriving in the box (3) being horizontal, the two bases (6, 7) limiting the box (3) are arranged horizontally and the opening(s) (8, 19) are formed only in the base (7) situated below the axis of the jet (4) upon its arrival in the box (3).

12. The water break nozzle according to one of claims 1 to 10, **characterized in that**, when the intake tube (1) sends water hotter than the water in the tank into the box (3), the axis of the jet (4) upon arriving in the box (3) being horizontal, the two bases (6, 7) limiting the box (3) are arranged horizontally and the opening(s) (9) are formed only in the base (6) situated above the axis of the jet (4) upon its arrival in the box (3).

13. The water break nozzle according to any one of the preceding claims, **characterized in that** one or several of the water intake tubes (20) arrive in the box (3).

14. The water break nozzle according to any one of the preceding claims, **characterized in that** one or several water outlet tubes (21) leave from the box (3).

15. The water break nozzle according to any one of the preceding claims, **characterized in that** the side wall (5) of the box (3) can be made up in whole or in part of part of the wall of the tank (2).

16. The water break nozzle according to any one of the preceding claims, **characterized in that** one of the bases (6, 7) of the box (3) can be made up in whole or in part of part of the wall of the tank (2).

17. The water break nozzle according to any one of claims 15 or 16, **characterized in that** one of the bases (6, 7) of the box (3) can be slightly curved.

18. A tank provided with a water break nozzle according to any one of the preceding claims.
